# EUROPEAN PATENT APPLICATION

(11) **EP 4 276 069 A1**
(43) Date of publication of application: **15.11.2023**
(21) Application number: 22172526.0
(22) Date of filing: 10.05.2022
(51) Int. Cl.: C01C 3/12, H01M 4/136, H01M 4/1397, H01M 4/58, H01M 10/054

(54) **SODIUM IRON(II)-HEXACYANOFERRATE(II) MATERIAL**

(71) Applicant: Altris AB, 753 18 Uppsala (SE)
(72) Inventor: BUCKEL, Alexander, Uppsala (SE); SVENSSON, Mikael, Uppsala (SE); MOGENSEN, Ronnie, Uppsala (SE); MA, Le Anh, Uppsala (SE)
(74) Representative: Kransell & Wennborg KB

(57) **Abstract**

The present disclosure relates to a sodium iron(II)-hexacyanoferrate(II) material, wherein the particles of the sodium iron(II)-hexacyanoferrate(II) material have a particle diameter D50 value within the range of from 7 µm to 50 µm and a BET specific surface area within the range of from 0.1 m²/g to 10 m²/g.

## Description

### Technical field

The present disclosure generally relates to a sodium iron(II)-hexacyanoferrate(II) material, a method for preparing the sodium iron(II)- hexacyanoferrate(II) material, an electrode comprising the sodium iron(II)-hexacyanoferrate(II) material and a battery cell comprising at least one electrode comprising the sodium iron(II)-hexacyanoferrate(II) material.

### Background

Lithium ion based batteries dominate the market for rechargeable batteries. However, the technology has drawbacks, not at least the relatively scarce resources of lithium. Although better than previous generations of secondary battery technologies, the lithium ion-based batteries are not environmentally friendly, and also costly from a recycling perspective.

Sodium ion batteries represent an attractive alternative to lithium ion batteries and are arguably the most viable means of supporting renewable energy sources for the purpose of load leveling and storing excess energy. The performance of sodium ion batteries is dependent on the properties of the electrode materials. Its cathode material is one of the key factors restricting the application of sodium ion battery.

Prussian blue analogue cathode materials stand out as promising cathode materials for use in sodium ion batteries. Prussian blue analogues have a unique crystal structure with open three-dimensional frameworks and large interstitial voids, and are capable of storing sodium ions. A Prussian blue analogue of particular interest herein, is sodium iron(II)- hexacyanoferrate(II), having a high Na content and low H₂O. Sodium iron(II)-hexacyanoferrate(II) has a white colour and is often referred to as "Prussian white". Prussian white is a Prussian blue analogue with the chemical formula of Na₂Fe₂(CN)₆ and negligible water content (<0.08 H₂O/f.u.).

When Prussian white is used as the active cathode material, drying is particularly important, since any water present in the Prussian white structure must be removed for the material to fully utilize its capacity in a battery cell. The presence of water may negatively affect the electrochemical potential and cycling stability in a battery cell comprising Prussian white as a cathode material.

The Prussian white material has been found to have variability in stable practical capacity and cycling stability. An important factor that has been identified is the impact of airborn moisture exposure on the electrochemical performance of the Prussian white material. Moisture exposure has been seen leading to Na-loss from the Prussian white structure and thus limited practical capacity.

Hence, there is still an issue with moisture-driven degradation and thus a need to improve the capacity and the moisture stability of the Prussian white electrode material.

### Summary

In view of the above-mentioned and other drawbacks of the prior art, it is an object of the present disclosure to provide improvements in relation to moisture stability and capacity fading for a sodium iron(II)-hexacyanoferrate(II) electrode material.

This and other objects of the present disclosure may be achieved by a sodium iron(II)-hexacyanoferrate(II) material according to claim 1. Further embodiments are set out in the dependent claims, in the following description and drawings.

As such, the present disclosure relates to a sodium iron(II)-hexacyanoferrate(II) powder material. The particles of the sodium iron(II)-hexacyanoferrate(II) powder material have a particle diameter D50 value within the range of from 7 µm to 50 µm and a BET specific surface area within the range of from 0.1 m²/g to 10 m²/g.

The particle size distribution is measured with laser diffraction with Mie theory utilizing a Malvern Mastersizer 3000 instrument with the accessory Areo S normal venturi for powders. The size range was set to 0.1-3500 µm. The samples were sieved through a 1 mm sieve prior the analysis.

The surface area (BET) is being measured on an accelerated surface area porosimeter (Micromeritics, ASAP, 2020), with N₂, adsorption at 77 K and is expressed in units of area per mass of sample (m²/g).

"Electrode" should herein be given a broad interpretation as an ion source member in various electrochemical devices such as, but not limited to batteries, fuel cells, electrochemical devices, and sensors.

It has been found by the present inventors that a sodium iron(II)-hexacyanoferrate(II) material having a particle diameter D50 value within the range of from 7 µm to 50 µm and a BET specific surface area within the range of from 0.1 m²/g to 10 m²/g may improve the capacity over time of the sodium iron(II)-hexacyanoferrate(II) material by reducing the capacity fading (loss of Na), in particular, moisture-driven degradation while maintaining a high conductivity. In order words, the loss of sodium in the sodium iron(II)-hexacyanoferrate(II) material leads to a limited practical capacity and the sodium iron(II)-hexacyanoferrate(II) material according to the present invention has been found less prone to Na loss, and thus less capacity being lost, when being exposed to moisture.

The particle diameter D50 value of the sodium iron(II)-hexacyanoferrate(II) material may be within the range of from 10 µm to 30 µm. The resulting sodium iron(II)-hexacyanoferrate(II) material has been found to provide an improved stability in moisture and thus a significant decrease of the capacity fading over time.

The particle diameter D50 value of the sodium iron(II)-hexacyanoferrate(II) material may be within the range of from 15 µm to 25 µm. The resulting sodium iron(II)-hexacyanoferrate(II) material has been found to provide highly improved stability in moisture and thus a significant decrease the capacity fading over time.

The BET specific surface area of the sodium iron(II)-hexacyanoferrate(II) material may be within the range of from 0.1 m²/g to 5 m²/g. The fact that the BET specific surface area of the sodium iron(II)-hexacyanoferrate(II) material is within the range of from 0.1 m²/g to 5 m²/g has been found to improve the stability of the sodium iron(II)-hexacyanoferrate(II) material in moisture. Sodium iron(II)-hexacyanoferrate(II) material with a large BET surface area has a greater exposure to moisture, which may induce Na-loss and capacity fading over time.

The BET specific surface area of the sodium iron(II)-hexacyanoferrate(II) material may be within the range of from 0.1 m²/g to 1 m²/g. This has been found to significantly improve the moisture stability of the sodium iron(II)-hexacyanoferrate(II) material.

A particle diameter D10 value of the sodium iron(II)-hexacyanoferrate(II) material may be within the range of from 1 µm to 15 µm. A reduced number of particles having a particle diameter in the lower range of from 1 µm to 15 µm has been seen to improve the stability in moisture. Such a sodium iron(II)-hexacyanoferrate(II) material may additionally have an improved, or at least satisfactory, conductivity.

A particle diameter D90 value of the sodium iron(II)-hexacyanoferrate(II) material may be within the range of from 10 µm to 600 µm. Such sodium iron(II)-hexacyanoferrate(II) material has been found to significantly improve the stability in moisture of the sodium iron(II)-hexacyanoferrate(II) material material.

The sodium iron(II)-hexacyanoferrate(II) material may exhibit a cubic crystal form.

Preferably, the sodium iron(II)-hexacyanoferrate(II) material has the chemical formula Na_{2-y}Fe[Fe(CN)₆]·m H₂O, where y < 0.2 and 0 < m < 3

Such Prussian white material has a high sodium content and a high-theoretical capacity (~170 mAh/g). However, it has been found to have a high variability of reported stable practical capacity and cycling stability. An important factor that has been identified is the impact of airborn moisture exposure on the electrochemical performance of the Prussian white material.

It has been found by the present inventors that a Prussian white material having a particle diameter D50 value within the range of from 10 µm to 50 µm and a BET specific surface area within the range of from 0.1 m²/g to 10 m²/g according to the present disclosure provides moisture stability and less Na-loss to the otherwise moisture sensitive material, as demonstrated in the Example Section.

The present disclosure furthermore relates to a method for preparing a sodium iron(II)-hexacyanoferrate(II) material according to any one of the preceding claims, the method comprising the steps of;
- acid decomposition of Na₄Fe(CN)₆*10H₂O in an acid wherein the H+ to Fe ratio is within the range of from 7:1 to 1:1 and the temperature is within the range of from 50°C to 120°C during a period of time within the range of from 0.1 hour to 30 hours to obtain a powder of Na_{2-y}Fe[Fe(CN)₆]*mH₂O wherein y is <0.2 and m is between 0 and 3;
- separating and drying the obtained powder, the powder having a particle diameter D50 value within the range of from 7 µm to 50 µm and a BET specific surface area within the range of from 0.1 m²/g to 10 m²/g.

The present inventors have found that a method according to the present disclosure enables preparation, by a simple and cost-efficient method, of a sodium iron(II)-hexacyanoferrate(II) material having a particle diameter D50 value within the range of from 7 µm to 50 µm and a BET specific surface area within the range of from 0.1 m²/g to 10 m²/g which improves the stability of the electrode material in moisture and reduces the capacity loss over time. In particular, it has been found that by controlling the amount of acid and the period of time during which the acid was added as disclosed herein, the particle size of the material could be advantageously controlled and adapted to obtain the sodium iron(II)-hexacyanoferrate(II) material according to the present disclosure.

The separation method may be carried out by any known separation method in the present field, prior to drying and removal of water from the powder.

The temperature during the acid decomposition step may be within the range of from 50°C to 100°C.

The pressure may be at, or near, ambient pressure.

It has been seen that in a method wherein the temperature during acid decomposition step is held within the range of from 50°C to 120°C, preferably within the range of from 50°C to 100°C, and with an ambient pressure being maintained, no or very low corrosion of the reactor material is seen.

The duration of the acid decomposition step may be within the range of from 3h to 24h, optionally within the range of from 3h to 10h.

The duration of the acid decomposition step may be adapted depending on whether a high yield or a rapid process is desired. It has been found by the present inventors that when the process time is prolonged, with the set time being within the range according to the present disclosure, the yield is higher. A more rapid process will result in a higher material consumption, i.e. a higher amount of material needed to arrive at the same yield.

The acid in the acid decomposition step may be any one of Hydrochloric acid (HCI), Citric acid, Formic acid, Ascorbic acid, Acetic acid, Sulphuric acid, Hydroiodic acid (HI), Hydrobromic acid (HBr), Nitric acid (HNO₃), Phosphoric acid (H₃PO₄). Preferably the acid in the acid decomposition step is a reducing acid.

The H+ to Fe ratio may be within the range of from 5:1 to 1:1. It has been found that a H+ to Fe ratio within the range of from 5:1 to 1:1 provide a reduced etching of the particles, resulting in an improved yield and reduced manufacturing cost.

The H+ to Fe ratio may be within the range of from 3:1 to 1:1.

In a further aspect, the present disclosure relates to an electrode comprising the sodium iron(II)-hexacyanoferrate(II) material according to the present disclosure.

In a still further aspect, the present disclosure relates to a battery cell comprising at least one electrode according to the present disclosure, the electrode forming a positive electrode and sodium source in the battery cell.

### Brief description of drawings

Some example embodiments will be described with reference to the accompanying figures, in which:
Figure 1 shows SEM images of sodium iron(II)-hexacyanoferrate(II) materials with different particle sizes (D50) according to comparative examples and according to the present disclosure;
Figure 2 schematically illustrates a battery cell according to the present disclosure;
Figure 3 schematically illustrates two alternative methods for preparing a sodium iron(II)-hexacyanoferrate(II) material according to the present disclosure; and
Figure 4 is a graph illustrating comparative results of a five days cycle study of four sodium iron(II)-hexacyanoferrate(II) material material according to the present disclosure.

### Detailed description

A sodium iron(II)-hexacyanoferrate(II) materialaccording to the present disclosure may have the formula (Na_{2-y}Fe[Fe(CN)₆].mH2O) where y is <0.2 and 0<m<3, commonly referred to as Prussian white.

The sodium iron(II)-hexacyanoferrate(II) material has a particle diameter D50 value within the range of from 7 µm to 50 µm and a BET specific surface area within the range of from 0.1 m²/g to 10 m²/g. It has been found by the present inventors that such sodium iron(II)-hexacyanoferrate(II) material is more stable in moisture and thus exhibits a reduced capacity fading over time when being exposed to moisture.

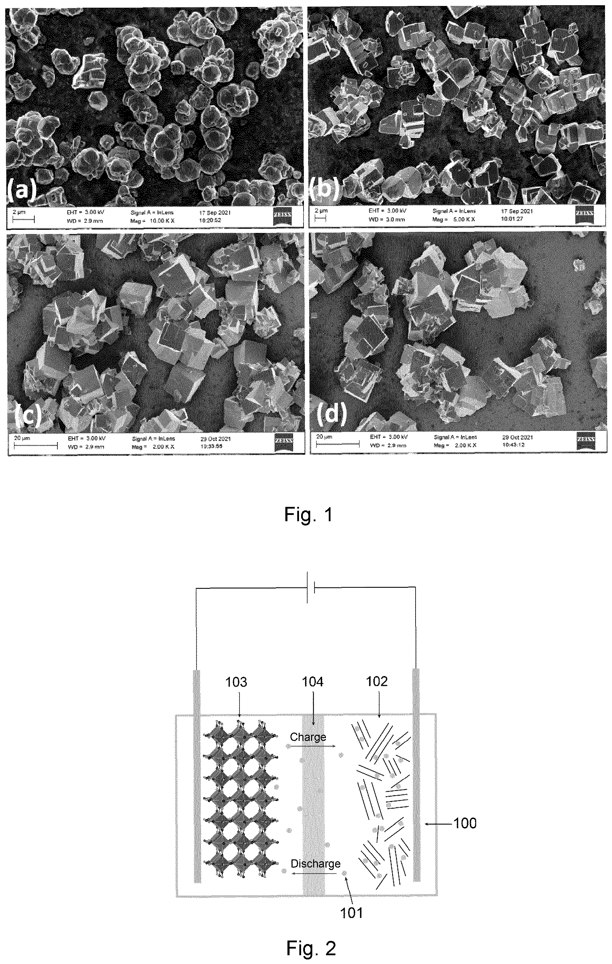

Figure 1 illustrates SEM images of a sodium iron(II)-hexacyanoferrate(II) materialof differing particles sizes. In image a) the particles have particle size (D50) of 4.8 µm (D10 of 2 µm, D90 of 275.6 µm), in image b) the particles have particle size (D50) of 6.3 µm (D10 of 3.8 µm, D90 of 548.3 µm), in image c) the particles have particle size (D50) of 19.5 µm (D10 of 10.2 µm, D90 of 32.6 µm) and in image d) the particles have particle size (D50) of 20.5 µm (D10 of 11.8 µm, D90 of 33.3 µm). The BET specific surface area of the sample a) and sample b) were ranging from 1.97 m²/g to > 1 m²/g, and the BET specific surface area of the sample c) and the sample d) were ranging from 0.97 m²/g to 0.61 m²/g, as measured on an accelerated surface area porosimeter (Micromeritics, ASAP, 2020) with an N₂ adsorption at 77 K.

Figure 2 illustrates the schematic principles of a sodium battery comprising an electrode comprising the sodium iron(II)-hexacyanoferrate(II) material according to the present disclosure, the electrode forming a positive electrode and sodium source 100 utilizing sodium ions 101 as charge carriers. The sodium battery stores energy in chemical bonds of the negative electrode 102. Charging the battery 100 forces Na⁺ ions 101 to de-intercalate from the positive electrode 103 and migrate towards the negative electrode 102. During discharge, the process reverses. Once a circuit is completed, electrons pass back from the negative electrode 102 to the positive electrode 103 and the Na⁺ ions 101 travel back to the positive electrode 103. During discharge of the battery cell, as illustrated in figure 1, oxidation takes place at the negative electrode 102, while reduction takes place at the positive electrode 103. The current flow is determined by the potential difference between the positive electrode 103 and the negative electrode 102, the cell voltage.

The two electrodes are separated by an electrolyte 104; for example 1 M NaPF6-EC:DEC.

As used herein, the term "battery" means a device comprising one or more electrochemical cells.

In an "electrochemical cell", chemical energy is transformed into electricity by reduction and oxidation (redox) reactions at the electrodes.

The positive electrode material thus comprises a Prussian white material with the chemical formula (Na_{2-y}Fe[Fe(CN)₆].mH2O) where y is <0.2 according to the present disclosure

The conductivity paired with the good rate capability of the cathode material allows for fast charging and discharging

The negative electrode material is not particularly limited as long as it is a material capable of storing/releasing sodium. Examples include metal composite oxides, sodium metal, sodium alloys, silicon, silicon-based alloys, tin-based alloys, bismuth-based alloys, metal oxides, conductive polymers such as polyacetylene, Na-Co-Ni-based materials, hard carbon and the like.

The battery cell may further comprise a separator 105 to prevent electrical short circuit between the negative and the positive electrodes, and to provide mechanical stability to the cell. The separator material can be any material which is chemically stable and electrically insulating, e.g. polymer films commonly made from polypropylene, polyethylene or combinations of these.

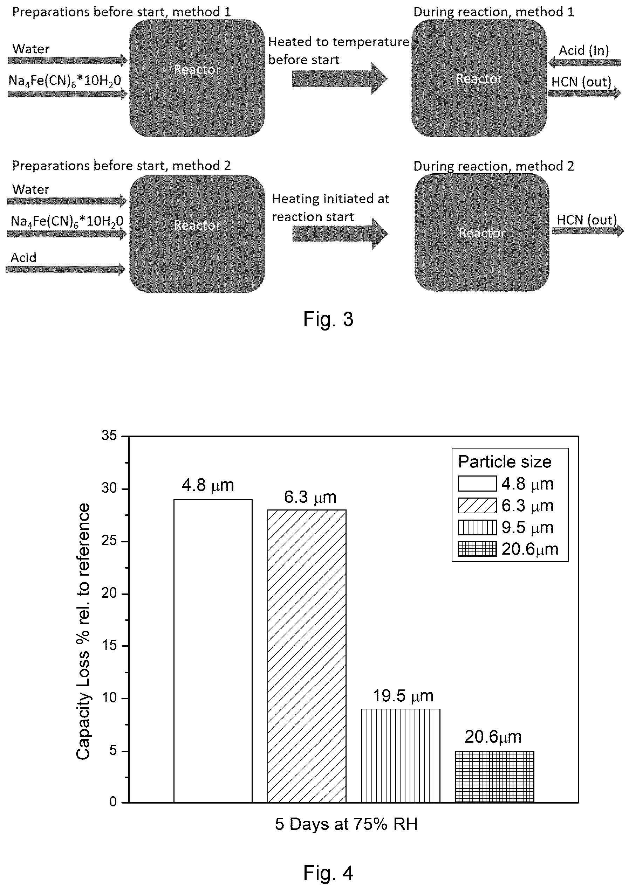

The method according to the present invention of producing a Prussian white material for a sodium battery as illustrated in Figure 1 is hereby illustrated in Figure 3 and comprises in a method 1, the steps of; acid decomposition of Na₄Fe(CN)₆*10H₂O in an acid wherein the H+ to Fe ratio is within the range of from 7:1 to 1:1 and the temperature is within the range of from 50°C to 120°C during a period of time within the range of from 0.1 hour to 30 hours to obtain a powder of Na_{2-y}Fe[Fe(CN)₆]*mH₂0 wherein x is <0.2 and m is between 0 and 3 and (B) separating and drying the obtained powder. In the method 2, the difference compared to method 1 is that the mix of water and Na₄Fe(CN)₆*10H₂O was heated prior to adding the acid. The powder having a particle diameter D50 value within the range of from 10 µm to 50 µm and a BET specific surface area within the range of from 0.1 m²/g to 10 m²/g.

In method 2, the reaction begins with the acid decomposition of Na₄Fe(CN)₆*10H₂O with an acid, for example using HCI, wherein the H+ to Fe ratio is within the range of from 7:1 to 1:1. The temperature is held within the range of from 50°C to 120°C during a period of time within the range of from 0.1 hour to 30 hours.

The acid may alternatively be any one of Citric acid, Formic acid, Ascorbic acid, Acetic acid, Sulphuric acid, Hydroiodic acid (HI), Hydrobromic acid (HBr), Nitric acid (HNO₃), Phosphoric acid (H₃PO₄). The reaction mixture is then cooled to room temperature (RT) and filtered in air.

A further step may include forming an electrode comprising the Prussian white powder according to the present disclosure. Electrodes are being prepared by conventional slurry casting where the Prussian white powder prepared according to the present disclosure, is mixed with conductive additive, binder and solvent in a ball mill. The slurry is then deposited onto a current collector; the film thickness is controlled by the doctor blade technique. One or more electrodes comprising the Prussian white powder is/are arranged in a battery cell and will form a high voltage, high capacity and moisture resistant positive electrode(s).

Devices similar to the above-described electrode, for example fuel cell electrodes could advantageously comprise the Prussian white powder according to the present disclosure and produced according to the present disclosure.

### Experimental data

### Example 1: Preparation of a Prussian blue analogue electrode material

By using the above described method and following the steps as laid out in Figure 3, Prussian white can be synthesized yielding preferred particle sizes according to the present disclosure.

### Example 2: Comparative study of Cycling stability of Prussian blue analogue powders with varying particle size and BET specific surface area

The resulting powders are mixed with solvent, conductive additive and binder by milling, for example ball milling, for 1 h. The solvent may be any type of solvent known to skilled person. The conductive additive may be any type of conductive additive known to the skilled person. For example, various types of carbon compounds, e.g. Super P, C65, C45, carbon black, e.g. ketjen black may be utilized. The binder is not limited to a particular binder. For example, alginate, carboxymethyl cellulose (CMC), styerene-butadiene rubber (SBR), polyvinylidene fluoride (PVdF) may be used. The resulting slurries are then applied onto a metal foil and evenly distributed by a doctor bladed. The solvent is removed from the electrodes at 80°C over 30 min and either transferred to inert storage (reference samples) or to a storage container with 75% RH for 5 days (exposed samples). All electrodes are then dried at 120°C for 12 h. The presented capacity loss is the relative difference between the reference and the exposed samples.

In conclusion, the samples according to the present disclosure demonstrates surprisingly reduced Na-loss and thus improved moisture stability compared to the comparative samples with smaller particle sizes.

## Claims

1. A sodium iron(II)-hexacyanoferrate(II) material, wherein the particles of the sodium iron(II)-hexacyanoferrate(II) material have a particle diameter D50 value within the range of from 7 µm to 50 µm and a BET specific surface area within the range of from 0.1 m²/g to 10 m²/g, the particle diameter D50 and the BET specific surface area being determined according to the methods as disclosed herein.

2. The sodium iron(II)-hexacyanoferrate(II) material according to claim 1,
wherein the particle diameter D50 value within the range of from 10 µm to 30 µm.

3. The sodium iron(II)-hexacyanoferrate(II) material according to claim 1,
wherein the particle diameter D50 value within the range of from 15 µm to 25 µm.

4. The sodium iron(II)-hexacyanoferrate(II) material according to any one of claims 1-3, from wherein the BET specific surface area within the range of from 0.1 m²/g to 5 m²/g.

5. The sodium iron(II)-hexacyanoferrate(II) material according to any one of claims 1-3, wherein the BET specific surface area within the range of from 0.1 m²/g to 1 m²/g.

6. The sodium iron(II)-hexacyanoferrate(II) material according to any one of the preceding claims, wherein the particle diameter D10 value within the range of from 1 µm to 15 µm.

7. The sodium iron(II)-hexacyanoferrate(II) material according to any one of the preceding claims, wherein the particle diameter D90 value within the range of from 10 µm to 600 µm.
The sodium iron(II)-hexacyanoferrate(II) material according to any one of the preceding claims wherein the sodium iron(II)-hexacyanoferrate(II) material is a cubic crystal form.

8. The sodium iron(II)-hexacyanoferrate(II) material according to any one of the preceding claims, wherein the sodium iron(II)-hexacyanoferrate(II) material has the formula Na_{2-y}Fe[Fe(CN)₆]·m H₂O, where y < 0.2 and 0 < m < 3.

9. A method for preparing a sodium iron(II)-hexacyanoferrate(II) material according to any one of the preceding claims, the method comprising the steps of;
- acid decomposition of Na₄Fe(CN)₆*10H₂O in an acid wherein the H+ to Fe ratio is within the range of from 7:1 to 1:1 and the temperature is within the range of from 50°C to 120°C during a period of time within the range of from 0.1 hour to 30 hours to obtain a powder of Na₂₋ₓFe[Fe(CN)₆]*mH₂0 wherein x is <0.2 and m is between 0 and 3;
- separating and drying the obtained powder, the powder having a particle diameter D50 value within the range of from 7 µm to 50 µm and a BET specific surface area within the range of from 0.1 m²/g to 10 m²/g.

10. The method for preparing a sodium iron(II)-hexacyanoferrate(II) material according to claim 10, wherein the temperature during the acid decomposition step is within the range of from 50°C to 100°C.

11. The method for preparing a sodium iron(II)-hexacyanoferrate(II) material according to claim 10 or 11, wherein the duration of the acid decomposition step is within the range of from 3h to 24h, optionally within the range of from 3h to 10h.

12. The method for preparing a sodium iron(II)-hexacyanoferrate(II) material according to anyone of claims 10 to 12, wherein acid in the acid decomposition step may be any one of Hydrochloric acid (HCI), Citric acid, Formic acid, Ascorbic acid, Acetic acid, Sulphuric acid, Hydroiodic acid (HI), Hydrobromic acid (HBr), Nitric acid (HNO₃), Phosphoric acid (H₃PO₄).

13. The method for preparing a sodium iron(II)-hexacyanoferrate(II) material according to anyone of claims 10 to 13, wherein the H+ to Fe ratio is within the range of from 5:1 to 1:1.

14. An electrode comprising the Prussian blue analogue material according to any one of claims 1 to 9.

15. A battery cell comprising at least one electrode according to claim 15, the electrode forming a positive electrode and sodium or potassium source in the battery cell.
